# EUROPEAN PATENT APPLICATION

(11) **EP 2 743 321 A1**
(43) Date of publication of application: **18.06.2014**
(21) Application number: 13005749.0
(22) Date of filing: 10.12.2013
(51) Int. Cl.: C09J 4/06, B32B 27/32, C09J 5/00, C09J 7/00, C09J 131/04

(54) **Laminated composite materials and processes for preparing the same**

(30) Priority: 11.12.2012 US 201261735769 P
(71) Applicant: Celanese Emulsions GmbH, 65843 Sulzbach (Taunus) (DE)
(72) Inventor: Tortosa, Javier, 65189 Wiesbaden (DE); Rossi, Ivan, 21010 Cardano al Campo (VA) (IT); Jakob, Martin, 65779 Kelkheim (DE); Hardt, Daniela, 65843 Sulzbach Ts (DE)
(74) Representative: Lahrtz, Fritz

(57) **Abstract**

In a process for adhesively bonding porous or semi-porous substrates to form a laminated composite material, an adhesive composition is provided between the substrate; and substrates are pressed together to adhesively bond the substrates into the laminated composite material. The adhesive composition comprises an aqueous polyvinyl ester dispersion comprising: at least one a polymer of a vinyl ester of a C₁₋₁₃ alkanoic acid and is substantially free of plasticizers and formaldehyde.

## Description

### FIELD

The present invention relates to laminated composite materials, and to processes for making such materials.

### BACKGROUND

For decades, urea-formaldehyde resins have been the most commonly used adhesives in the production of laminated composite materials by, for example, bonding veneer to chipboard or medium density fiberboard (MDF), veneer to veneer, plywood and multilayer formed wood. Thus urea-formaldehyde resins are very economical and, on thermosetting, yield a bond with excellent mechanical properties sufficient to allow their use in the production of curved laminated panels.

More recently, melamine-formaldehyde resins, melamine-urea-formaldehyde resins and phenol-formaldehyde resins have been used in lamination adhesives as binders or co-binders with urea-formaldehyde resins both to modify the properties of the adhesive and to drive a reduction in the formaldehyde emission from the adhesive. Since formaldehyde is suspected to be a human carcinogen, there is an increasing requirement to reduce and/or eliminate the presence of formaldehyde in lamination adhesives.

The emission of formaldehyde from formaldehyde-based resins can be reduced by the addition of formaldehyde scavengers but generally this is accompanied by a loss in the mechanical properties and the ease of processing of the adhesives. It is also known to formulate lamination adhesives by blending urea-formaldehyde resins with polyvinyl acetate dispersions since the latter enhance the setting and elastic properties of the resins. Thus polyvinyl acetate dispersions containing plasticizer are frequently combined with urea-formaldehyde and similar adhesives in the production of laminates which must be pressed into curved panels.

Laminated composite materials may be used for a variety of purposes, including as furniture. However, depending on the desired degree of curvature in the materials, the individual components of the composite may begin to separate over time, leading to product failure. As a result, the development of a formaldehyde-free adhesive that can be used in the production of curved laminated composite materials provides a unique challenge.

For example, U.S. Patent No. 3,925,289 discloses adhesive compositions comprising a polyvinyl acetate emulsion, a persulfate and N-methylolacrylamide, useful for bonding wood veneers, paper, cloths, leather and the like, exhibiting excellent water resistance. Although the adhesives do not contain formaldehyde-based resins, it is known that N-methylol acrylamide releases formaldehyde during curing. The adhesives may further comprise plasticizers.

U.S. Publication No. 2009/0312481 discloses an aqueous polyvinyl ester dispersion comprising at least one vinyl ester copolymer, at least one ethylenically unsaturated monomer containing N-alkylol groups, at least one protective colloid, at least one carboxylic acid and/or salt thereof, and at least one water-soluble salt with a divalent metal ion suitable for adhesively bonding porous or semi-porous substrates, such as wood. Again, a preferred monomer containing N-alkylol groups N-methylol acrylamide. U.S. Publication No. 2009/0312481 further discloses that the dispersion may further comprise customary additives which are typically used in adhesive formulations, including plasticizers. Further additives include crosslinking compounds which may comprise formaldehyde.

Surprisingly, it has now been found that laminated composite materials with excellent delamination resistance, water resistance and heat resistance can be produced using an adhesive composition comprising a polyvinyl ester dispersion that is substantially free of formaldehyde, provided the dispersion is also substantially free of plasticizers. Moreover the use of such an adhesive composition allows the pressing time and the temperature to be reduced as compared with conventional urea-formaldehyde adhesives.

### SUMMARY

In a first embodiment, the present invention is directed to a process producing a laminated composite material, comprising: applying an adhesive composition between two substantially planar porous or semi-porous substrate; pressing the porous or semi-porous substrates to adhesively bond the substrates into a laminated composite material; wherein the adhesive composition comprises an aqueous polyvinyl ester dispersion comprising: at least one a polymer of a vinyl ester of a C₁₋₁₃ alkanoic acid; and further wherein the adhesive composition is substantially free of plasticizers and formaldehyde. The pressing may be performed at a temperature greater than 15°C, such as from 40°C to 150°C. In some embodiments, the pressing may impart curvature to the substrates so as to produce a curved laminated composite material. The adhesive composition may have a film tensile strength of at least 10 N/mm² or of at least 15 N/mm². The porous or semi-porous substrate may be selected from the group consisting of wood (including natural wood and plywood and other wood products), veneer, MDF, chip board, fiber board, and combinations thereof. The laminated composite material may further comprise a decorative layer. The adhesive composition may have D3 and D4 water resistance according to EN 204 and/or Type II to Type I water resistance according to ANSI/HPVA.

In a second embodiment, the present invention is directed to a curved laminated composite material composite material formed by applying an adhesive composition between at least two porous or semi-porous substrates; and pressing the substrates to impart curvature to the substrates and to adhesively bond the substrates into a curved laminated composite material; wherein the adhesive composition comprises an aqueous polyvinyl ester dispersion comprising: at least one a polymer of a vinyl ester of a C₁₋₁₃ alkanoic acid; and further wherein the adhesive composition is substantially free of plasticizers and formaldehyde.

In a third embodiment, the present invention is directed to a laminated composite material comprising: at least two layers of porous or semi-porous' substrate, wherein the at least two layers of porous or semi-porous substrates are bonded together with an adhesive composition substantially free of plasticizers and formaldehyde; wherein the adhesive composition comprises at least one polymer of a vinyl ester of a C₁₋₁₃ alkanoic acid. The adhesive composition may have a tensile strength of at least 10 or of at least 15, optionally from 10 to 40, or from 15 to 25 N/mm². In some embodiments, the laminated composite material may be curved. The laminated composite material may comprise at least five layers of porous or semi-porous substrate. If desired, the adhesive composition may have D3 and D4 water resistance according to EN 204 and/or Type II to Type I water resistance according to ANSI/HPVA. In some embodiments, the vinyl ester may be vinyl acetate. The adhesive composition may comprise from 50 to 100%, e.g., from 70 to 100%, by weight of the at least one polymer of a vinyl ester of a C₁₋₁₃ alkanoic acid. The at least one polymer of a vinyl ester of a C₁₋₁₃ alkanoic acid may comprise at least one auxiliary co-monomer selected from the group consisting of N-methylol-containing comonomers, unsaturated silane co-monomers, glycidyl co-monomers, cyclic ureido co-monomers and combinations thereof. The adhesive composition may further comprise at least one auxiliary component selected from the group consisting of fillers, polyvinyl alcohol, dispersing agents, defoamers and biocides, provided that the auxiliary agent does not act as a plasticizer. In some embodiments, the adhesive composition may comprise from 0.5 to 25 % by weight of the at least one auxiliary component.

### DESCRIPTION

In general, this invention relates to laminated composite materials and to processes for preparing them. Laminated composite materials include materials with at least two porous or semi-porous substrates that are adhesively bonded together. The substrates may be substantially planar before they are adhesively bonded. The substrates are bonded together with an adhesive and are then subjected to pressing. The pressing may be used to bond the substrates and optionally to impart curvature to the laminated composite material.

The adhesive composition used to bond the substrates is substantially free of formaldehyde and of plasticizers. Surprisingly and unexpectedly, a curved laminated composite material wherein the substrates are bonded with adhesive that is substantially free of formaldehyde and of plasticizers has been found to have sufficient tensile strength, e.g., for the substrates to be resistant to separation. A curved laminate composite material is a material that is substantially non-planar in at least one direction. For example, a laminated composite material may have a concave surface or a convex surface. In other embodiments, the laminated composite material may have concave portions and convex portions. The degree of curvature may vary widely depending on the type and thickness of the substrates.

### Process for Forming Laminated Composite Material

As described herein, at least two substantially planar porous or semi-porous substrates are bonded together with an adhesive composition. The porous or semi-porous substrates may include wood, veneer, MDF, chip board, fiber board, and combinations thereof. In some embodiments, the porous or semi-porous substrates may include hardwood, plywood, particleboard, MDF, and oriented strandboard.

The adhesive composition can be applied by the use of roller coating, knife coating, extrusion, curtain coating, foam coaters and spray coaters, one example of which is the spinning disk resin applicator. The lower viscosity compositions in the present disclosure are particularly useful for spray coating and spinning disk applications, such as in particleboard, MDF, and oriented strandboard applications.

The adhesive composition may be used to form a laminated composite material by bonding at least two layers of porous or semi-porous substrates together. In some embodiments, the laminated composite material may comprise at least three layers, e.g., at least five layers, at least ten layers, or at least fifteen layers. When more than two layers are present in the laminated composite material, each layer is bonded to another layer by the adhesive composition.

In further embodiments, the laminated composite material may comprise a decorative layer. The decorative layer may be the outermost layer or layers of the material. In some embodiments, the decorative layer is the surface layer and may be the surface layer on both side of the material.

The bonding of the at least two layers includes a drying process for the adhesive composition. In some embodiments, the adhesive composition may air dry at room temperature. In other embodiments, the adhesive composition is applied to the porous or semi-porous substrate and is then pressed at a temperature of greater than 15°C, e.g., greater than 20°C, greater than 30°C or greater than 40°C. In terms of ranges, the pressing temperature may range from 40°C to 150°C, e.g., 40°C to 120°C. Temperatures above 150°C are possible but may lead to damaging the porous or semi-porous substrate. However, depending on the substrate, temperatures above 150°C may be utilized.

The pressing may also be used to impart curvature to the laminated composite material. The laminated composite material is pressed and dried in a curved position, so that the adhesive composition dries while the material is curved.

The adhesive composition, once dried, may have a film tensile strength of at least 10 N/mm², e.g., at least 15 N/mm² and an elongation less than 100%, e.g., less than 50%, less than 10% or less than 5%, both when measured according to DIN 53328.

### Adhesive Composition

The adhesive composition comprises an aqueous polyvinyl ester dispersion, wherein the adhesive is unplasticized, e.g., is substantially free of plasticizers or is free of plasticizers. This includes components commonly referred to as plasticizers and to components that may function as a plasticizer, that is components which enhance the elasticity and/or fluidity of the adhesive composition. Specifically, the adhesive composition may be free of conventionally used plasticizers, including phthalates, benzoates, butyldiglycol acetate and dibutylglycol acetate. Further, the adhesive composition is substantially free of or is free of formaldehyde. As used herein, "substantially free of plasticizer" is defined as less than 1 wt.%, preferably less than 0.5 wt.%, or less than 0.1 wt.% plasticizer, and most desirably no measurable plasticizer. "Substantially free of formaldehyde" is defined as less than 300 wppm formaldehyde, e.g., less than 150 wppm formaldehyde, or less than 50 wppm formaldehyde and desirably no measurable formaldehyde. In embodiments where greater water resistance is desired, greater levels of formaldehyde, e.g., up to 300 wppm formaldehyde, may be tolerable.

If desired for a particular end use application, the adhesive composition used herein may be resistant to water and may have D3 and D4 water resistance according to EN 204, a standard for thermoplastic wood adhesives non-structural applications. Further, the adhesive composition may have Type II to Type I water resistance according to ANSI/HPVA, the American national standard for hardwood and decorative plywood.

The adhesive composition may further comprise auxiliary components, including fillers, dispersing agents, defoamers, biocides, starches, and protective colloids. It is understood that when auxiliary components are included in the adhesive composition, they are not plasticizers and do not function as plasticizers. It is further understood that auxiliary components are chosen and added such that heat resistance and final bonding performance are not affected. The auxiliary component may be present from 0.5 to 25 wt.%, based on the total weight of the adhesive composition.

Various biocides may be included to prolong the shelf life of adhesive compositions. Biocides may generally include, but are not limited germicides, antibacterials, antifungals, and fungicides. Exemplary biocides include sodium hypochlorite, and hydrogen peroxide.

Protective colloids, such as polyvinyl alcohol and other conventional protective colloid-forming materials, may be used, with or without emulsifier(s), to stabilize adhesive compositions of the types hereinbefore described.

An example of a suitable protective colloid is polyvinyl alcohol, particularly polyvinyl alcohol with a degree of hydrolysis of 60-100 mol %, preferably from 70 to 98 mol %, and with viscosities, of the 4% strength by weight aqueous solutions at 20°C, of from 2 to 70 mPa*s. Also suitable are functional polyvinyl alcohols such as the formal copolymers of vinyl alcohol and, if desired, vinyl acetate with ethene, with vinyl acetoacetate or isopropenyl alcohol, or those containing carboxyl groups or alkoxysilane groups.

As protective colloids it is additionally possible to use etherified cellulose derivatives, examples being hydroxyethylcellulose, hydroxypropylcellulose and carboxymethylcellulose. These can be used either alone or in combination with polyvinyl alcohol. Likewise suitable are polyvinylpyrrolidone, polycarboxylic acids such as polyacrylic acid and also copolymers of maleic acid or of maleic anhydride with ethylenically unsaturated compounds such as methyl vinyl ether or styrene. Also suitable are polyalkylene glycols or the alkali metal salts of polyacrylic acids and polymethacrylic acids, starch derivatives and gelatin derivatives, 2-acrylamido-2-methylpropanesulfonic acid and/or 4-styrenesulfonic acid copolymers and their alkali metal salts, but also homopolymers and copolymers of N-vinylpyrrolidone, N-vinylcaprolactam, N-vinylcarbazole, 1-vinylimidazole, 2-vinylimidazole, 2-vinylpyridine, 4-vinylpyridine, acrylamide, methacrylamide, amino-bearing acrylates, methacrylates, acrylamides and/or methacrylamides.

A detailed description of further suitable protective colloids can be found in Houben-Weyl, Methoden der organischen Chemie, volume XIV/1, Makromolekulare Stoffe [Macromolecular Compounds], Georg-Thieme-Verlag, Stuttgart, 1961, pages 411 to 420. Preference is given to the predominant use of polyvinyl alcohol. Based on the total amount of the monomers, the fraction of the protective colloids is preferably from 1% to 20% by weight, in particular from 2% to 14% by weight.

In addition to the protective colloids it is possible to use anionic and/or nonionic emulsifiers in the present polymer dispersion as additional stabilizers. These additional stabilizers, if present, are present typically in amounts of up to 2% by weight, based on the total amount of the monomers. Compounds suitable for this purpose can be found in relevant compilations known to the skilled worker, such as the Surfactant Applications Directory (D. R. Karsa et al., Ed., Blackie, London 1991) or in Houben-Weyl, Methoden der organischen Chemie, volume XIV/1, Makromolekulare Stoffe [Macromolecular Compounds], Georg-Thieme-Verlag, Stuttgart, 1961, pages 190 to 208.

Suitable anionic emulsifiers include sodium, potassium and ammonium salts of straight-chain aliphatic carboxylic acids of chain length C₁₂-C₂₀, sodium hydroxyoctadecanesulfonate, sodium, potassium and ammonium salts of hydroxy fatty acids of chain length C₁₂-C₂₀ and their sulfation and/or acetylation products thereof, alkyl sulfates, also in the form of triethanolamine salts, alkyl-(C₁₀-C₂₀)-sulfonates, alkyl(C₁₀-C₂₀)-arylsulfonates, dimethyldialkyl-(C₈-C₁₈)-ammonium chloride, and sulfation products thereof, alkali metal salts of sulfosuccinic esters with aliphatic saturated monohydric alcohols of chain length C₄-C₁₆, sulfosuccinic 4-esters with polyethylene glycol ethers of monohydric aliphatic alcohols of chain length C₁₀-C₁₂ (disodium salt), sulfosuccinic 4-esters with polyethylene glycol nonylphenyl ether (disodium salt), sulfosuccinic acid biscyclohexyl ester (sodium salt), lignosulfonic acid and the calcium, magnesium, sodium and ammonium salts thereof, resin acids, hydrogenated and dehydrogenated resin acids and alkali metal salts thereof, sodium (dodecylated diphenyl ether) disulfonate and sodium laurylsulfate, or ethoxylated sodium lauryl ether sulfate. It is also possible to use mixtures of anionic emulsifiers.

Suitable nonionic emulsifiers include acyl, alkyl, oleyl and alkylaryl ethoxylates. Examples include ethoxylated mono-, di- and trialkylphenols (EO: from 3 to 50, alkyl substituted radical: C₄ to C₁₂) and ethoxylated fatty alcohols (EO: from 3 to 80; alkyl radical: C₈ to C₃₆), especially C₁₂-C₁₄-fatty alcohol ethoxylates, C₁₃-C₁₅-oxo alcohol ethoxylates, C₁₆-C₁₈-fatty alcohol ethoxylates, C₁₋₁₀-oxo alcohol ethoxylates, C₁₋₃-oxo alcohol ethoxylates, polyoxyethylene sorbitanmonooleate with ethylene oxide groups, copolymers of ethylene oxide and propylene oxide with a minimum content of 10% by weight of ethylene oxide, the polyethylene oxide ethers of oleyl alcohol and the polyethylene oxide ethers of nonylphenol. Particularly suitable are the polyethylene oxide ethers of fatty alcohols, especially those of C₁₂-C₁₄-fatty alcohols. It is also possible to use mixtures of nonionic emulsifiers.

Fillers, also referred to as extenders, may be added to the adhesive composition to improve working properties, permanence, and strength. The fillers may be lignocellulosic or organic in nature. Preferred fillers useful in the adhesive compositions herein can be, for example, calcium carbonate, magnesite, dolomite, kaolin, mica, talc, silica, calcium sulfate, feldspar, barium sulfate and opaque polymer. The fillers may be used as individual components. Mixtures of fillers such as, for example, calcium carbonate/kaolin and calcium carbonate/kaolin/talc have also been found to be particularly useful in practice.

Starches may be included in the adhesive composition to increase viscosity. Exemplary starches include maize, wheat, potato, arrowroot, rice, sago, barley, sorghum, rye, triticale, tapioca, waxy maize, waxy sorghum, sweet potato, waxy rice, mung bean, and modified versions and derivatives thereof. In some embodiments, the starch may be modified maize starch. The starch may be present from 0 to 20 wt.%, e.g., from 10 to 20 wt.%.

Dispersing agents may be included in the adhesive composition to improve the separation of the particles and to prevent settling or clumping of the particles. Dispersing agents may include, for example, polyacrylates or polyphosphates.

Defoamers may be added to the adhesive composition to reduce the formation of foam. However, it is understood that the defoamer does not act as a plasticizing agent. Exemplary defoamers may include mineral oil defoamers or silicone defoamers.

### Aqueous Vinyl Ester Polymer Dispersion and Preparation Thereof

As described herein, the adhesive composition comprises an aqueous polyvinyl ester dispersion. The aqueous polyvinyl ester dispersion comprises at least one polymer of a C₁₋₁₃ vinyl ester. The at least one polymer of a C₁₋₁₃ vinyl ester may be present from 70 to 100 wt.% of the adhesive composition, e.g., from 70 to 95 wt.% or from 70 to 90 wt.%. The vinyl ester employed is generally a vinyl ester of a saturated carboxylic acid having 1 to 13, typically 2 to 8, carbon atoms, especially vinyl acetate. A non-limiting list of such vinyl esters includes vinyl formiate, vinyl acetate, vinyl propionate, vinyl butyrate, vinyl isobutyrate, vinyl valerate, vinyl-2-ethyl-hexanoate, vinyl isooctanoate, vinyl nonate, vinyl decanoate, vinyl pivalate, vinyl versatate, and mixtures thereof. As indicated, vinyl acetate is a preferred monomer because of its ready availability and low cost.

### Optional Auxiliary Co-Monomers

The at least one polymer of a C₁₋₁₃ vinyl ester may comprise at least one of a variety of optional co-monomers. Such optional co-monomers can be those which promote better adhesiveness. Such desirable adhesive can include, for example, enhanced adhesion to surfaces or substrates, improved wet adhesion, better resistance to removal by weathering or abrasion, and improved rigidity, particularly when used for forming curved laminated composites.

The optional co-monomers useful for incorporation into the emulsion copolymers of the compositions herein are those which contain at least one polymerizable double bond along with one or more additional functional moieties. Such optional or auxiliary co-monomers can thus include N-methylol-containing co-monomers, N-methylolether-containing comonomers, unsaturated silane co-monomers, glycidyl co-monomers, ureido co-monomers, and combinations of these auxiliary optional co-monomers.

Suitable comonomers containing N-methylol groups are selected from the group consisting of N-methylolacrylamide, N-methylolmethacrylamide, N-methylolallylcarbamate, N-methylolmaleamide, N-methylolmaleamic acid, and the N-methylol amides of aromatic vinyl carboxylic acids. However, since these comonomers tend to produce formaldehyde during cross-linking, the fraction of these comonomers as a proportion of the total monomer amount is generally maintained at less than 1.5 % by weight, such as from 0.01% to 1.5% by weight, for example from 0.05% to 0.8% by weight.

Unsaturated silanes useful as optional co-monomers can generally correspond to a substituted silane of the structural Formula I: 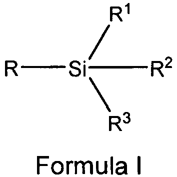 in which R denotes an organic radical olefinically unsaturated in the ω-position and R¹, R² and R³ which may be identical or different, denote halogen, preferably chlorine, or the group -OZ, Z denoting hydrogen or primary or secondary alkyl or acyl radicals optionally substituted by alkoxy groups. Suitable unsaturated silane compounds of the Formula I are preferably those in which the radical R in the formula represents an ω-unsaturated alkenyl of 2 to 10 carbon atoms, particularly of 2 to 4 carbon atoms, or an ω-unsaturated carboxylic acid ester formed from unsaturated carboxylic acids of up to 4 carbon atoms and alcohols carrying the Si group of up to 6 carbon atoms. Suitable radicals R¹, R², R³ are preferably the group -OZ, Z representing primary and/or secondary alkyl radicals of up to 10 carbon atoms, preferably up to 4 carbon atoms, or alkyl radicals substituted by alkoxy groups, preferably of up to 3 carbon atoms, or acyl radicals of up to 6 carbon atoms, preferably of up to 3 carbon atoms, or hydrogen. Most preferred unsaturated silane co-monomers are vinyl trialkoxy silanes.

Examples of preferred silane compounds of the Formula I include γ-methacryloxypropyltris(2-methoxyethoxy)silane, vinylmethoxysilane, vinyltriethoxysilane, vinyldiethoxysilanol, vinylethoxysilanediol, allyltriethoxysilane, vinyltripropoxysilane, vinyltriisopropoxysilane, vinyltributoxysilane, vinyltriacetoxysilane, trimethylglycolvinylsilane, γ-methacryloxypropyltrimethylglycolsilane, γ-acryloxypropyltriethoxysilane and γ-methacryloxypropyltrimethoxysilane.

Glycidyl compounds can also be used as optional auxiliary co-monomers in the vinyl ester polymer. Glycidyl compounds are epoxy-containing materials and can facilitate cross-linking of the emulsion copolymers in the copolymer blend. Examples of suitable glycidyl optional co-monomers include glycidyl acrylate, glycidyl methacrylate, allyl glycidyl ether, vinyl glycidyl ether, vinyltoluenes and styrenes substituted with a glycidyl radical in the aromatic moiety, and vinylbenzoates substituted with a glycidyl radical in the aromatic moiety

Another type of optional co-monomer for use in the at least one polymer of a C₁₋₁₃ vinyl ester comprises cyclic ureido co-monomers. Cyclic ureido co-monomers are known to impart improved wet adhesion properties to films and coatings formed from copolymers containing these co-monomers. Cyclic ureido compounds and their use as wet adhesion promoting co-monomers are disclosed in U.S. Patent Nos. 4,104,220; 4,111,877; 4,219,454; 4,319,032; 4,599,417 and 5,208,285. The disclosures of all of these U.S. patents are incorporated herein by reference in their entirety.

### Vinyl Ester Polymer Preparation

The at least one polymer of a C₁₋₁₃ vinyl ester may be form by using convention emulsion polymerization procedures. In a typical polymerization procedure, the vinyl ester and any optional co-monomers can be polymerized in an aqueous medium in a suitable polymerization vessel under pressures not exceeding 100 atmospheres in the presence of a catalyst component and at least one emulsifying agent. The aqueous reaction mixture in the polymerization vessel can be maintained by a suitable buffering agent at a pH of about 2 to 9. The emulsion polymerization can typically be carried out at a temperature in the range from 50°C to 90°C. Monomer conversion can typically range from 95 to above 99 percent.

The manner of combining the polymerization ingredients, i.e., emulsifiers, co-monomers, catalyst system components, etc., can vary widely. Generally an aqueous medium containing at least some of the emulsifier(s) can be initially formed in the polymerization vessel with the various other polymerization' ingredients being added to the vessel thereafter.

The optional co-monomers can be added to the polymerization vessel continuously, incrementally or as a single charge addition of the entire amounts of co-monomers to be used. Co-monomers can be employed as pure monomers or can be used in the form of a pre-mixed emulsion. Ethylene as a co-monomer can be pumped into the polymerization vessel and maintained under appropriate pressure therein.

Catalyst system components can also be added to the polymerization vessel continuously, incrementally in stages, or as a single charge addition. Suitable polymerization catalysts include the water-soluble free-radical-formers (initiators) generally used in emulsion polymerization, such as hydrogen peroxide, sodium persulfate, potassium persulfate and ammonium persulfate, as well as tert-butyl hydroperoxide, in amounts of between 0.01% and 3% by weight, preferably 0.01% and 1% by weight, based on the total amount of the emulsion. These materials can be used together with reducing agents such as sodium formaldehyde-sulfoxylate, ferrous salts, sodium dithionite, sodium hydrogen sulfite, sodium sulfite, sodium thiosulfate, as redox catalysts in amounts of 0.01 % to 3% by weight, preferably 0.01% to 1% by weight, based on the total amount of the emulsion. The free-radical-formers can be added to the aqueous emulsifier solution initially present in the polymerization vessel or can be added during the polymerization in staged doses. When redox systems are to be formed in the polymerization vessels, the initiator should be added separately, e.g., in separate solutions, from the reducing agent(s).

As noted, the entire amount of the aqueous medium with the polymerization additives can be present in the polymerization vessel before introduction of the co-monomers. Or alternatively, the aqueous medium, or a portion of it, can be added continuously or incrementally during the course of the polymerization.

In a typical polymerization procedure, the polymerization reactor can be filled with an aqueous protective colloid and/or protective colloid/emulsifier solution. Then at least a part of the co-monomers to be polymerized are added. After this initial reaction mixture is homogenized via agitation, polymerization can be started by adding at least a part of the catalyst system in order to prepare *in situ* seed material. Thereafter incremental or continuous addition of the remaining co-monomers and catalyst system components can be carried out to complete the preparation of the emulsion polymer. Alternatively, instead of preparation of *in situ* seed material, an aqueous medium containing a seed dispersion may be separately prepared and added to the polymerization vessel, again followed by addition of the remaining co-monomers and catalyst material.

The invention will now be more particularly described with reference to the following non-limiting Examples.

### Example 1

A vinyl acetate polymer dispersion was prepared as follows: An aqueous polymer dispersion was prepared on technical scale by known methods equipped with stirrer, metering vessels, reflux condenser, jacket heating and cooling, and a temperature measurement and control unit. The composition of the polymer dispersion was such as described in paragraphs [0074], [0075] and [0077] of US2005/0032970 A1. The amount of protective colloid was 7 pph related to 100 parts monomer base and consisted of a mix of partially hydrolyzed polyvinyl alcohols having a degree of hydrolysis of 88 mol % and 92 mol %. The amount of N-methylol acrylamide was 0.55 pph in the monomer composition. Prior to application the emulsion was catalyzed with an aqueous solution of aluminum chloride. The amount used was 1 pph active aluminum chloride related to the 100 parts of the polymer dispersion to result in a pH value between 3.0 and 3.5.

### Example 2

An adhesive composition was formulated from the vinyl acetate polymer dispersion of Example 1 together with 15wt.% starch.

### Comparative Example A

An adhesive composition was formulated from the vinyl acetate polymer dispersion of Example 1 together with 2.5 wt.% of a butyldiglycolacetate (BDGA) plasticizer.

### Comparative Example B

An adhesive composition was formulated from the vinyl acetate polymer dispersion of Example 2 together with 2.5 wt.% of a butyldiglycolacetate (BDGA) plasticizer.

### Testing Conditions

Each adhesive composition of Examples 1-2 and Comparative Examples A-B were analyzed for tensile strength and elongation according to DIN 53328 with specimen dimension PK III.

As shown below in Table 1, when the adhesive composition is substantially free of plasticizer and of formaldehyde, the tensile strength is' surprisingly and unexpectedly improved over the Comparative examples.

| TABLE 1 | | |
|---|---|---|
| | Tensile strength (N/mm²) | Elongation (%) |
| Example 1 | 17.2 | 4.6 |
| Example 2 | 22 | 17.2 |
| Comparative Example A | 6.3 | 351 |
| Comparative Example B | 8.8 | 295.6 |

While the illustrative embodiments of the disclosure have been described with particularity, it will be understood that various other modifications will be apparent to and can be readily made by those skilled in the art without departing from the spirit and scope of the disclosure. Accordingly, it is not intended that the scope of the claims appended hereto be limited to the examples and descriptions set forth herein but rather that the claims be construed as encompassing all the features of the patentable novelty which reside in the present disclosure, including all features which would be treated as equivalents thereof by those skilled in the art to which the disclosure pertains.

## Claims

1. A process for adhesively bonding porous or semi-porous substrates to form a laminated composite material, comprising:
applying an adhesive composition to between at least two substantially porous or semi-porous substrates; and
pressing the porous or semi-porous substrates to adhesively bond the substrates into the laminated composite material;
wherein the adhesive composition comprises an aqueous polyvinyl ester dispersion comprising: at least one a polymer of a vinyl ester of a C₁₋₁₃ alkanoic acid; and
further wherein the adhesive composition is substantially free of plasticizers and formaldehyde.

2. The process of claim 1, wherein the pressing is performed at a temperature greater than 15°C, preferably from 40°C to 150°C.

3. The process of any preceding claim, wherein the pressing imparts curvature to the substrates to produce a curved laminated composite material.

4. The process of any preceding claim, wherein the adhesive composition has a tensile strength of at least 10 N/mm², preferably at least 15 N/mm².

5. The process of any preceding claim, wherein the porous or semi-porous substrate is selected from the group consisting of wood, veneer, medium density fiberboard, chip board, fiber board, and combinations thereof.

6. The process of any preceding claim, wherein the adhesive composition has a D3 and D4 water resistance according to EN 204 and/or Type II to Type I water resistance according to ANSI/HPVA.

7. The process of any preceding claim, wherein the polyvinyl ester dispersion comprises a protective colloid stabilizer, preferably polyvinyl alcohol.

8. The process of any preceding claim, wherein the adhesive composition comprises less than 1 wt.%, preferably less than 0.5 wt.%, more preferably less than 0.1 wt.% plasticizer, and most preferably no measurable plasticizer.

9. The process of any preceding claim, wherein the adhesive composition comprises less than 300 wppm formaldehyde, preferably less than 150 wppm formaldehyde, more preferably than 50 wppm formaldehyde, and most preferably no measurable formaldehyde.

10. A laminated composite material composite material formed by the process of any preceding claim.

11. A laminated composite material comprising:
at least two layers of porous or semi-porous substrate, wherein the at least two layers of porous or semi-porous substrates are bonded together with an adhesive composition substantially free of plasticizers and formaldehyde;
wherein the adhesive composition comprises at least one polymer of a vinyl ester of a C₁₋₁₃ alkanoic acid, preferably vinyl acetate.

12. The laminated composite material of claim 11, wherein the adhesive composition has a tensile strength of at least 10 N/mm², preferably at least 15 N/mm².

13. The laminated composite material of claim 11 or claim 12, wherein the laminated composite material is curved.

14. The laminated composite material of any one of claims 11 to 13, wherein the adhesive composition has a D3 and D4 water resistance according to EN 204 and/or Type II to Type I water resistance according to ANSI/HPVA.

15. The laminated composite material of any one of claims 11 to 14, wherein the at least one polymer of a vinyl ester of a C₁₋₁₃ alkanoic acid comprises at least one auxiliary co-monomer selected from the group consisting of N-methylol-containing co-monomers, unsaturated silane co-monomers, glycidyl co-monomers, cyclic ureido co-monomers and combinations thereof.
